# EUROPEAN PATENT APPLICATION

(11) **EP 0 899 169 A1**
(43) Date of publication of application: **03.03.1999**
(21) Application number: 98306213.4
(22) Date of filing: 04.08.1998
(51) Int. Cl.: B60R 21/02

(54) **Automatic release device and operator restraining apparatus for mobile work equipment**

(30) Priority: 06.08.1997 GB 9716519
(71) Applicant: Riley, Richard, Seaton Sluice, Northumberland NE26 4JY (GB)
(72) Inventor: Riley, Richard, Seaton Sluice, Northumberland NE26 4JY (GB)
(74) Representative: Vinsome, Rex Martin

(57) **Abstract**

An automatic release device for a forklift truck 1 is disclosed. A counterweight 13 has a storage position and a working position, and a dowel 14 and angled slot 15 constrain the counterweight such that the counterweight 13 remains in a storage position when the forklift truck 1 is displaced less than a predetermined angle from an upright orientation thereof, but moves to a working position when the truck 1 is displaced more than said predetermined angle from the upright orientation. A release pin 24 maintains a safety bar 6 in a storage position thereof, and a release mechanism 18 is actuated by movement of the counterweight 13 to the working position thereof to release the release pin 24 to enable the safety bar 6 to move to its working position.

## Description

The present invention relates to automatic release devices and operator restraining apparatus for mobile work equipment, and relates particularly, but not exclusively, to such devices and apparatus for forklift trucks.

Forklift trucks are frequently constructed to have an open safety cage enclosing the operator when in use to protect the operator from injury due to objects falling on to the truck. However, known forklift trucks suffer from the disadvantage that trucks travelling in a curved path above a certain speed may overturn, with the frequent result that the operator falls out of the safety cage and is injured by the overturning truck.

One suggested solution to this problem involves enclosing the sides of the safety cage so that the operator cannot fall out if the truck overturns. However, since the use of a forklift truck often involves the operator frequently mounting and dismounting the truck, any solution which results in the obstruction of the sides of the truck impedes efficient use of the truck and is therefore impracticable.

Preferred embodiments of the present invention seek to overcome the above disadvantages of the prior art.

According to an aspect of the present invention, there is provided an automatic release device for enabling an operator restraining member of mobile work equipment to move from a storage position, allowing operator access to the equipment, to a working position, preventing an operator falling out of the equipment, the device comprising:
at least one weighted member having a storage position and a working position;
guide means for constraining the or each weighted member such that the weighted member when in a storage position remains therein when the mobile work equipment is displaced less than a predetermined angle from an upright orientation thereof, and moves to a working position thereof when the equipment is displaced more than said predetermined angle from the upright orientation thereof;
releasable restraining means for maintaining at least one operator restraining member in a respective storage position thereof; and
release means actuable by movement of the or each weighted member from the storage position to the working position thereof to release said restraining means to enable the or each said operator restraining member to move to the working position thereof.

By providing an automatic release device which automatically releases a restraining means when the mobile work equipment is displaced more than a predetermined amount from its upright orientation, this provides the advantage of allowing free operator access to the sides of the equipment when operating normally, while enabling one or more operator restraining members to be deployed as the equipment overturns, to prevent the operator from falling out of the equipment.

In a preferred embodiment, the or each weighted member comprises a respective projecting portion, and said guide means comprises a respective slot for receiving the or each said projecting portion and along which said projecting portion is adapted to slide.

Preferably, the or each said slot comprises a first portion and a second portion extending from the first portion such that when the equipment is in the upright orientation thereof the first portion is inclined relative to the horizontal and the second portion extends from the upper end of the first portion.

By providing a slot having a first portion which is inclined relative to the horizontal during normal operation of the equipment, this provides the advantage that by suitable choice of the angle of inclination, the apparatus can be arranged such that the projecting portion of the or each weighted member is held in the first portion by means of its own weight when the equipment is operating normally, but as the equipment starts to overturn, the or each projecting portion can slide along the respective first portion to the second portion of the slot to actuate the release means. This enables a particularly simple construction of the device, and also enables the device to be actuable by means of gravity.

The release means may be actuable by the impact of the or each weighted member moving into the working position thereof.

In a preferred embodiment, the release means comprises a release member adapted to move said restraining means out of engagement with at least one operator restraining member.

According to another aspect of the invention, there is provided an automatic operator restraining apparatus for mobile work equipment, the apparatus comprising an automatic release device as defined above and at least one operator restraining member mountable to an operator cage of mobile work equipment, wherein the or each said restraining member is slidable between the storage and working positions thereof when said release means is actuated.

In a preferred embodiment, the or each said restraining member is padded.

This provides the advantage of minimising injury to the operator when the restraining member slides into its working position, or the operator falls on to the deployed restraining member.

Each said restraining member may comprise a plurality of members slidable relative to each other to vary the length of the member.

This provides the advantage of enabling the or each restraining member to have a telescopic construction so that it can be mounted to a safety cage having non parallel supports.

In a preferred embodiment, the or each said restraining member is adapted to slide under gravity from the storage position to the working position thereof.

As an aid to understanding the invention, a preferred embodiment thereof will now be described, by way of example only and not in any limitative sense, with reference to the accompanying drawings, in which:-
Figure 1 is a schematic side elevation view of a forklift truck having automatic operator restraining apparatus embodying the present invention, but showing a single operator restraining bar in the storage and working positions thereof;
Figure 2 is a rear elevational view of the forklift truck shown in Figure 1;
Figure 3(a) is a detailed view of the release mechanism of Figure 2 in the storage position thereof; and
Figure 3(b) is a detailed view of the release mechanism of Figure 3(a) in the working position thereof.

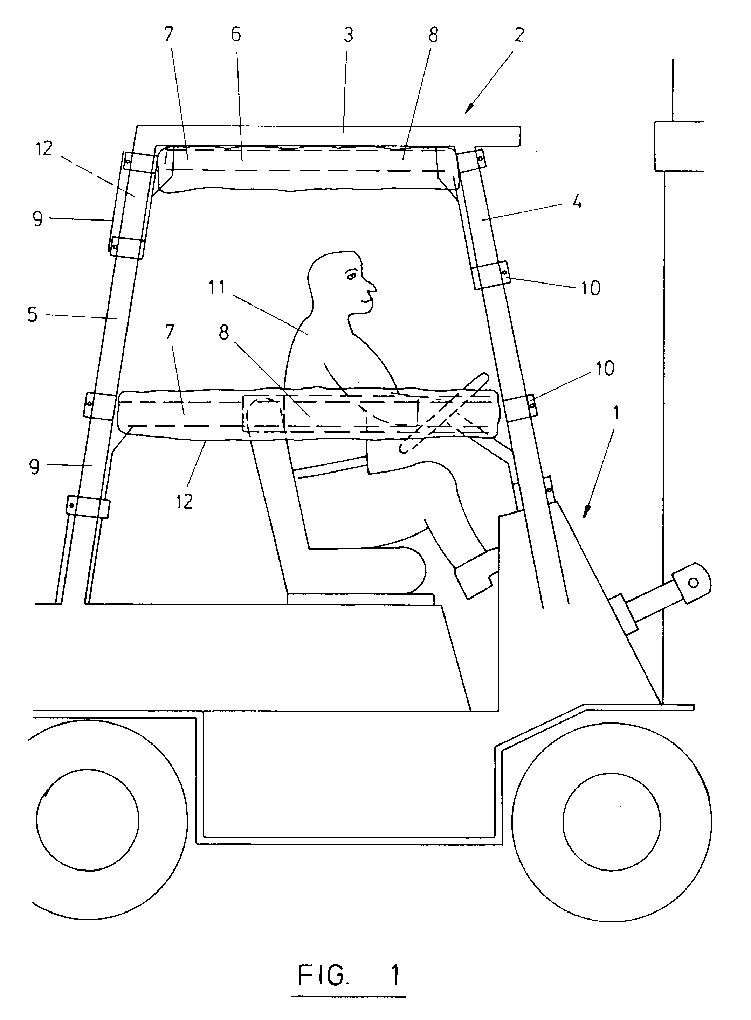

Referring to Figure 1, a forklift truck 1 includes a generally open sided operator safety cage 2 having a roof 3 supported by inclined front support members 4 and rear support members 5. A safety bar 6 comprises a pair of telescopic tubes 7, 8 of generally square cross-section, such that the tube 7 slides inside the tube 8 to vary the overall length of the bar 6.

The tubes 7 are each secured at one end thereof to a respective rear support 5 by means of a slidable bracket 9, and the tubes 8 are secured to the front supports 4 by means of similar slidable brackets 10. The brackets 9, 10 are slidable along supports 5, 4 respectively to enable the safety bar 6 to move between its storage position in the upper part of Figure 1 to its working position adjacent the operator 11 in the lower part of the figure. The bar 6 is surrounded by a padded shroud 12 of suitable material such as rubber or polystyrene to protect the operator 11 from injury as the bar 6 moves into its working position.

It will be appreciated by persons skilled in the art that although two safety bars 6 are shown in Figure 1 to clarify the operation of the apparatus, generally, each side of the safety cage 2 would preferably only be provided with one safety bar 6 (although the possibility is envisaged of each side of the safety cage 2 having more than one safety bar).

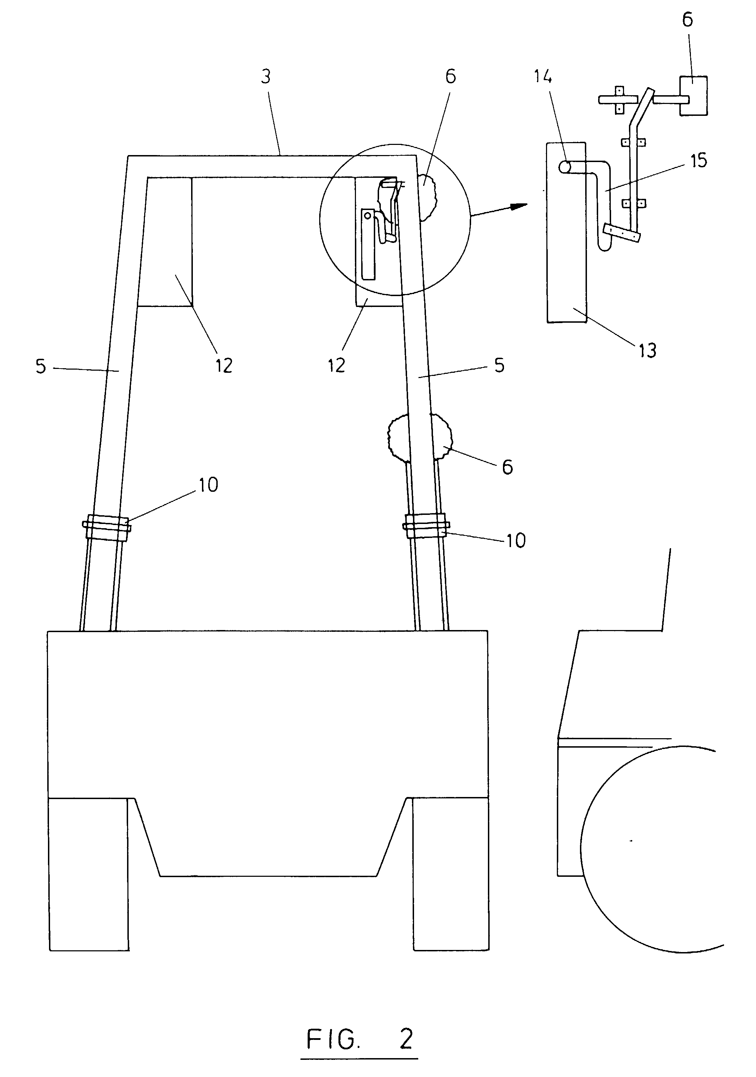

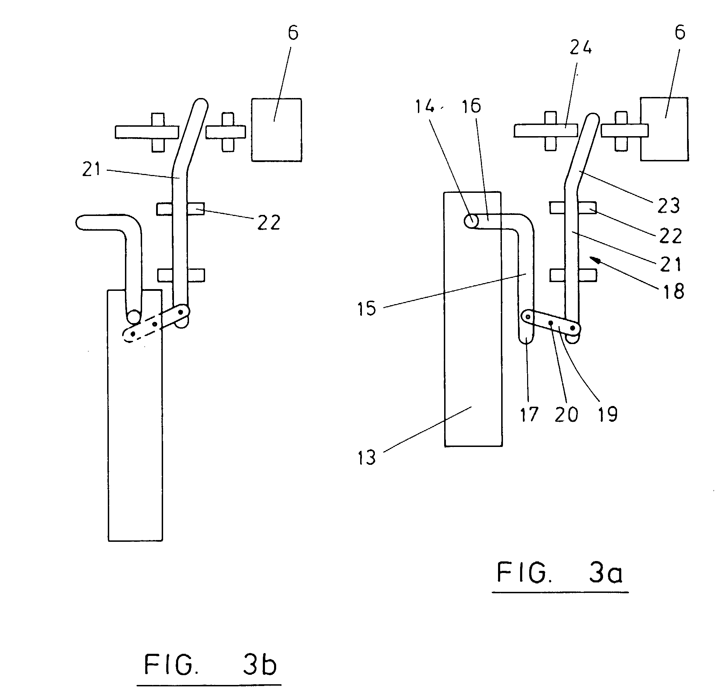

Referring to Figure 2, a release mechanism 12 is located at the rear portion of each side of the safety cage 2 to release a respective safety bar 6. The release mechanism is located at the rear of the side of the truck 1 in order to minimise the risk of obstruction of the sides of the truck, and comprises (see Figure 3a) a counterweight 13 having a dowel 14 projecting transversely therefrom, the dowel 14 being slidable within an angled slot 15 in a back plate (not shown) attached to the safety cage 2.

As shown in greater detail in Figure 3a, the slot 15 comprises an upper portion 16 which is inclined slightly to the horizontal when the truck 1 is in its upright orientation, and a generally vertical portion 17 extending from the first portion 16.

A release mechanism 18 comprises a pivot lever 19 fixed to the truck 1 about pivot point 20 such that one end of the pivot lever 19 is located at a lower part of the slot 15 and the other end is pivotally attached to a vertically displaceable lever 21 which is vertically slidable between supports 22. Movement of the left hand end of pivot lever 19 (as shown in Figure 3a) downwards about pivot point 20 causes displaceable lever 21 to move upwards.

The displaceable lever has an upper inclined portion 23 located within an aperture in a release pin 24 normally in engagement with safety bar 6, such that upward movement of displaceable lever 21 causes movement of the inclined portion 23 in the aperture to displace release pin 24 to the left as shown in the drawing. This then moves the release pin 24 out of engagement with the safety bar 6 as shown in Figure 3(b).

The operation of the apparatus shown in the figures will now be described.

When the truck 1 is operating normally (i.e. is in its upright orientation), the dowel of the counterweight 13 is located in the upper portion 16 of the slot 15. Because the upper portion 16 is inclined slightly upwards, small angular displacement of the truck 1 about its vertical orientation cause the dowel 14 to slide up the first portion 16 of the slot 15, but not far enough to reach the second portion 17.

If the truck should be displaced more than a predetermined amount from its vertical orientation, i.e. as a result of the truck 1 starting to overturn, the first portion 16 of the slot 15 is no longer inclined upwards, but may be inclined generally horizontally or even downwards. As a result, the dowel 14 slides along the slot 15 until it reaches the second portion 17 thereof, at which point the counterweight 13 falls rapidly downwards under its own weight. As a result, the dowel 14 strikes the end of the pivot lever 19 on reaching the bottom of slot 15, which in turn displaces the release pin 24 out of engagement with the safety bar 6. This then enables the safety bar 6 to slide downwards under its own weight to its working position to prevent the operator from falling out of the safety cage 2.

It will be appreciated by persons skilled in the art that the above embodiment has been described by way of example only and not in any limitative sense, and that various alterations and modifications are possible without departure from the scope of the invention as defined by the appended Claims. For example, the safety bar 6 may be attached to the roof 3 of the safety cage 2 by a flexible sheet or web, such as a canvas sheet, such that the canvas sheet covers the whole of the exposed side of the safety cage 2 from the roof 3 down to the waist level of the operator. In the normal orientation of the truck 1 the safety bar 6 slides down into its working position unhindered by the canvas sheet, and before the safety bar 6 hits any stops at the end of its movement the canvas sheet takes the full force of the bar 6. However, if the truck 1 begins to overturn, the weight of the operator will be against the padded safety bar 6 at waist level, but because the truck will generally have a tapered safety cage 2,the canvas sheet acts to prevent or minimise injury to the operator as a result of impact with the ground.

## Claims

1. An automatic release device for enabling an operator restraining member of mobile work equipment to move from a storage position, allowing operator access to the equipment, to a working position, preventing an operator falling out of the equipment, the device comprising:
at least one weighted member having a storage position and a working position;
guide means for constraining the or each weighted member such that the weighted member when in a storage position remains therein when the mobile work equipment is displaced less than a predetermined angle from an upright orientation thereof, and moves to a working position thereof when the equipment is displaced more than said predetermined angle from the upright orientation thereof;
releasable restraining means for maintaining at least one operator restraining member in a respective storage position thereof; and
release means actuable by movement of the or each weighted member from the storage position to the working position thereof to release said restraining means to enable the or each said operator restraining member to move to the working position thereof.

2. A device according to Claim 1, wherein the or each weighted member comprises a respective projecting portion, and said guide means comprises a respective slot for receiving the or each said projecting portion and along which said projecting portion is adapted to slide.

3. A device according to Claim 2, wherein the or each said slot comprises a first portion and a second portion extending from the first portion such that when the equipment is in the upright orientation thereof the first portion is inclined relative to the horizontal and the second portion extends from the upper end of the first portion.

4. A device according to any one of the preceding claims, wherein the release means is actuable by the impact of the or each weighted member moving into the working position thereof.

5. A device according to any one of the preceding claims, wherein the release means comprises a release member adapted to move said restraining means out of engagement with at least one operator restraining member.

6. An automatic operator restraining apparatus for mobile work equipment, the apparatus comprising an automatic release device according to any one of the preceding claims, and at least one operator restraining member mountable to an operator cage of mobile work equipment, wherein the or each said restraining member is slidable between the storage and working positions thereof when said release means is actuated.

7. An apparatus according to Claim 6, wherein the or each said restraining member is padded.

8. An apparatus according to Claim 6 or 7, wherein the or each said restraining member comprises a plurality of members slidable relative to each other to vary the length of the member.

9. An apparatus according to any one of Claims 6 to 8, wherein the or each said restraining member is adapted to slide under gravity from the storage position to the working position thereof.
